# FASCICULE DE BREVET EUROPEEN

(11) **EP 3 677 038 B1**
(45) Date de publication et mention de la délivrance du brevet: **14.05.2025**
(21) Numéro de dépôt: 18742514.5
(22) Date de dépôt: 25.07.2018
(51) Int. Cl.: H04N 21/443, H04N 21/458, H04N 21/6433, H04N 21/643, H04N 21/81, G06F 8/65, H04N 21/236, H04N 21/262

(54) **PROCÉDÉ DE RÉCUPÉRATION D'UN FICHIER CIBLE D'UN LOGICIEL D'EXPLOITATION ET DISPOSITIF D'UTILISATION**
VERFAHREN UND VORRICHTUNG ZUR WIEDERHERSTELLUNG EINER ZIELDATEI EINER BETRIEBSSOFTWARE UND VORRICHTUNG ZUR VERWENDUNG DAVON
METHOD FOR RECOVERING A TARGET FILE OF OPERATING SOFTWARE AND DEVICE FOR USE THEREOF

(30) Priorité: 30.08.2017 FR 1757999
(43) Date de publication de la demande: 08.07.2020
(73) Titulaire: Sagemcom Broadband SAS, 92270 Bois-Colombes (FR)
(72) Inventeur: BELKHEIR, Cedric, 92500 Rueil Malmaison (FR); CAMMAS, Anthony, 92500 Rueil Malmaison (FR)
(74) Mandataire: Regimbeau
(86) Numéro de dépôt international: PCT/EP2018/070097
(87) Numéro de publication internationale: WO 2019/042664

(56) Documents cités:
- US-A1- 2002 128 029
- US-A1- 2010 058 421
- US-A1- 2012 096 495

## Description

### DOMAINE TECHNIQUE DE L'INVENTION

L'invention a pour objet un procédé de récupération d'un fichier cible ainsi que les dispositifs d'utilisation d'un tel procédé.

Le domaine de l'invention est celui des équipements de réception audio/vidéo et plus particulièrement celui de la mise à jour de tels équipements.

Un fichier cible est par exemple, un logiciel d'exploitation d'un équipement audio/vidéo ou un fichier vidéo.

### ETAT DE LA TECHNIQUE ANTERIEURE

Un équipement de réception audio vidéo est un dispositif de traitements capable de recevoir des signaux, analogiques ou numériques, et de mettre en forme ces signaux pour qu'ils soient visualisables sur un écran, par exemple une télévision. Classiquement un tel équipement comporte:
- Des interfaces d'entrées radio terrestre, radio satellite et/ou câblée ; et
- Au moins une interface de sortie, par exemple une interface hdmi, display port, péritel ou autre.

Un tel équipement est généralement appelé une « box » ou encore une « set top box ». C'est l'équipement de base fournit par les opérateurs de télévision.

Classiquement un équipement de réception audio vidéo permet aussi de naviguer sur internet, d'accéder à des services de rediffusion, d'accéder à des services.

Un équipement de réception audio vidéo est généralement piloté par une télécommande. Il peut s'agir d'une télécommande classique ou d'un téléphone mobile connecté directement à l'équipement ou à un même réseau local que l'équipement.

Un tel équipement peut être intégré dans un téléviseur.

Un tel équipement comporte un système d'exploitation pour gérer l'interaction de ses fonctionnalités avec des commandes émises par un utilisateur. Ce système d'exploitation est aussi appelé « firmware » ou micrologiciel. Il est habituel de pouvoir mettre à jour le micrologiciel afin de permettre à l'équipement de s'adapter à l'évolution des fonctionnalités.

La solution de l'état de la technique consiste à diffuser, sur un canal dédié via des paquets de données, des paquets correspondant aux codes instructions du système d'exploitation. Ces paquets sont diffusés en continu, l'un après l'autre de manière cyclique. C'est-à-dire qu'après la diffusion du dernier paquet, la diffusion reprend avec le premier paquet. Ainsi il suffit que l'équipement écoute le canal dédié pour récupérer tous les paquets de données dont l'assemblage lui permettra de mettre à jour son système d'exploitation. Classiquement un paquet de données comporte un identifiant qui est composé d'un numéro de version et d'un numéro d'ordre dans la version. L'assemblage ordonné de tous les paquets d'une version permet de reconstituer le fichier correspondant au système d'exploitation.

Ce système présente comme inconvénient d'être long. En effet l'ordre de grandeur de la taille d'un système d'exploitation pour un équipement de réception audio/vidéo est de 130 Mo. Sur une interface de réception satellite, sachant que le canal de mise à jour a une bande passante étroite pour des raisons de rentabilité, cela peut représenter un temps de récupération de l'ordre de 17 minutes avec un debit à 1Mbps, ce qui n'est pas la norme. Dans le cas d'un équipement neuf livré sans système d'exploitation, ou avec un système d'exploitation minimal, ce temps peut être perçu comme très décevant.

### EXPOSE DE L'INVENTION

L'invention résout ce problème de mise à jour du système d'exploitation d'un équipement de réception audio/vidéo en enseignant l'utilisation de plusieurs interfaces de diffusion distinctes dont l'une au moins sans voie de retour. On parle aussi d'une interface de diffusion non connectée. L'invention permet en général d'optimiser la récupération d'un fichier cible qui peut aussi être un fichier vidéo qui doit être poussé sur un équipement de réception audio/vidéo, le fichier vidéo devant être poussé, par exemple, suite à une transaction sur une plateforme de vidéo à la demande.

Le principe général de l'invention est de rendre disponible simultanément les données :
- Dans le sens « normal », du début à la fin, sur une interface IP via un serveur de fichier (HTTP/FTP/...) ;
- Dans le sens « inverse », de la fin au début, sur une interface broadcast via un carrousel DSM-CC, on parlera d'un canal dédié.

Ainsi l'équipement de réception audio/vidéo fait l'acquisition des données en simultané sur les deux interfaces :
- L'équipement de réception audio/vidéo se connecte sur le carrousel DSM-CC et commence à recevoir des données à partir d'un paquet Pn (qui est le paquet présent sur le carrousel au moment où la STB se connecte),
- Le carrousel diffuse les données en ordre inverse, l'équipement de réception audio/vidéo reçoit les paquets Pn, Pn-1, Pn-2... depuis le carrousel,
- Dans le même temps, l'équipement de réception audio/vidéo se connecte à un serveur par le réseau IP et lui demande les paquets par ordre normal en commençant par le paquet Pn+1 puis Pn+2, etc.
- Lorsque l'une des interfaces atteint une extrémité du fichier, elle reboucle et continue à partir de l'autre extrémité : lorsque le carrousel atteint le premier paquet P0, il continue à partir du dernier paquet PN (fonctionnement normal pour un carrousel), et lorsque le téléchargement IP atteint le dernier paquet PN, il continue à partir du premier paquet P0.

Le téléchargement est terminé lorsque toutes les données du fichier cible ont été acquises.

L'invention a donc pour objet un procédé de récupération d'un fichier cible par un équipement de réception audio/vidéo ledit équipement de réception audio/vidéo comportant au moins deux interfaces de communications, une première interface de communication apte à recevoir des données diffusées et une deuxième interface de communication apte à l'établissement d'un dialogue bidirectionnel avec un serveur, caractérisé en ce que le procédé comporte les étapes suivantes :
- Connexion de la première interface de communication sur un canal prédéterminé diffusant des données cible, les données étant structurée en paquets, chaque paquet étant d'un type parmi des types prédéfinis ;
- Réception, via la première interface de communication d'un paquet de description comportant des informations sur la structure des paquets de données composant le fichier cible;
- Allocation d'une zone de stockage d'une taille déterminée selon la description, chaque paquet étant associé à une taille, la taille de la zone de stockage est égale à la somme des tailles des paquets ;
- Réception via la première interface d'un premier paquet de données chaque paquet de données comportant :
   ∘ Un identifiant rang de paquet représentant le rang du paquet parmi tous les paquets du fichier cible ;
   ∘ Des données en quantité telle que décrite par le paquet de description reçu ;
- Emission d'une première requête via la deuxième interface de communication pour obtenir le fichier cible à partir d'une position de requête déterminée à partir de la position dans le fichier cible du premier paquet reçu ;
- Enregistrement des données reçues par la première interface dans la zone de stockage allouée;
- Enregistrement des données reçues par la deuxième interface dans la zone de stockage allouée;
- Arrêt des enregistrements quand la zone de stockage allouée est pleine,
les paquets de données reçus via la première interface étant reçus par rang décroissant, tandis que les paquets reçus via la deuxième interface étant reçus par ordre croissant, lors de l'enregistrement des données reçues par la première interface dans la zone de stockage allouée, les données étant enregistrées depuis le premier paquet reçu vers le début du fichier cible, chaque paquet de données étant enregistré à partir d'une position égale à la somme des tailles des paquets de rang inférieur au sien dans la zone de stockage et, lors de l'enregistrement des données reçues par la deuxième interface dans la zone de stockage allouée, les octets reçus étant continument enregistrés à partir de la position utilisée par la première requête dans la zone de stockage, les données étant enregistrées depuis la fin de premier paquet reçu vers la fin du fichier cible.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles:
- Les informations sur la structure des paquets comportent au moins un nombre de paquets de données pour reconstituer le fichier cible et au moins une taille Tp d'un paquet de données associée à au moins un rang de paquet ;
- Les informations sur la structure des paquets comportent le nombre de paquets de données pour reconstituer le fichier cible, la taille d'un paquet étant connue a priori et tous les paquets ayant la même taille ;
- Les informations sur la structure des paquets comportent la taille d'un paquet et la taille du fichier cible ;
- Les données sont reçues en ordre différents sur les deux interfaces ;
- Si la valeur obtenue en additionnant la position utilisée par la première requête avec la quantité de données obtenue en réponse à la première requête devient supérieure ou égale à la taille de la zone de stockage allouée alors le procédé comporte les étapes suivantes :
   ∘ Fin de l'enregistrement des données reçues par la deuxième interface en réponse à la première requête ;
   ∘ Emission d'une deuxième requête via la deuxième interface de communication pour obtenir le fichier cible à partir d'une position de requête égale à 0 ;
   ∘ Enregistrement des données reçues par la deuxième interface, en réponse à la deuxième requête, dans la zone de stockage allouée, les octets reçus étant continument enregistrés à partir de la position utilisée par la deuxième requête dans la zone de stockage ;
- Si la position d'écriture courante, dans la zone de stockage, des données reçues via la deuxième interface a été inférieure à la position d'écriture courante, dans la zone de stockage, des données reçues via la première interface, et si la position d'écriture courante, dans la zone de stockage, des données reçues via la deuxième interface devient supérieure à la position d'écriture courante, dans la zone de stockage, des données reçues via la première interface, alors le procédé met en œuvre les étapes suivantes :
   ∘ Fin de l'enregistrement des données reçues par la deuxième interface ;
   ∘ Emission d'une troisième requête via la deuxième interface de communication pour obtenir le fichier cible à partir d'une position de requête égale à la position d'un premier paquet manquant ;
   ∘ Enregistrement des données reçues par la deuxième interface, en réponse à la troisième requête, dans la zone de stockage allouée, les octets reçus étant continument enregistrés à partir de la position utilisée par la troisième requête dans la zone de stockage jusqu'à concurrence de la taille du paquet ;
   ∘ Répétition des étapes précédentes tant qu'il y a des paquets manquants ;
- Les données d'un paquet de données reçu via la première interface ne sont enregistrées dans la zone de stockage que si l'identifiant du paquet de données est associé, au niveau de l'équipement de réception, à une information d'absence des données.

L'invention a également pour objet un dispositif mémoire non transitoire comportant des codes instructions pour la mise en œuvre du procédé selon l'une des combinaisons possibles des caractéristiques précédentes.

L'invention a également pour objet un équipement de réception audio/vidéo mettant en œuvre un procédé selon l'une des combinaisons possibles des caractéristiques précédentes.

L'invention a également pour objet un produit programme d'ordinateur comprenant des instructions qui, lorsque le programme est exécuté par un ordinateur, conduisent celui-ci à mettre en œuvre les étapes du procédé selon l'une des combinaisons possibles des caractéristiques précédentes.

### BREVE DESCRIPTION DES FIGURES

D'autres caractéristiques et avantages de l'invention ressortiront à la lecture de la description qui suit, en référence aux figures annexées, qui illustrent :
- La figure 1 : une illustration d'un équipement de réception audio/vidéo apte à mettre en œuvre le procédé selon l'invention ;
- La figure 2 : une illustration d'étapes du procédé selon l'invention.

Pour plus de clarté, les éléments identiques ou similaires sont repérés par des signes de référence identiques sur l'ensemble des figures.

L'invention sera mieux comprise à la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

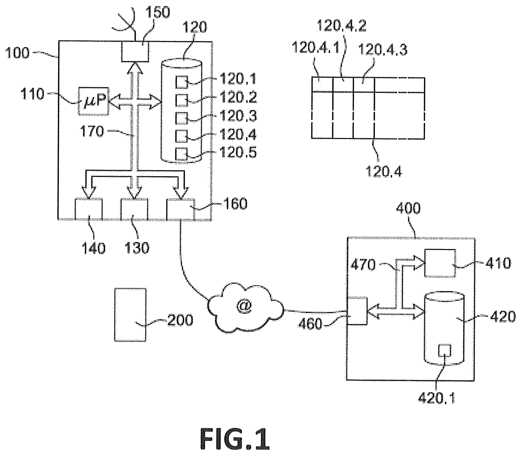

La figure 1 montre un équipement 100 de réception audio/vidéo. La figure 1 montre que l'équipement 100 comporte :
- Un microprocesseur 110 ;
- Des moyens de 120 de stockage. Des moyens de stockages sont, par exemple : un disque dur, un disque statique à semi-conducteurs, un composant mémoire tel une mémoire flash ;
- Une interface 130 de communication avec une télécommande 200, par exemple une interface de communication infrarouge ou une interface ce communication radio ;
- Une interface 140 de communication avec un écran non représenté, par exemple une interface de communication péritel, hdmi, miracast, dvi, vga, ... ;
- Une première interface 150 de réception d'une diffusion multimédia. Une telle interface est par exemple une interface vers le réseau numérique terrestre de diffusion de la télévision, ou une interface vers un réseau de diffusion par satellite. Cette première interface est sans voie de retour. Il s'agit donc d'une interface de communication unidirectionnelle ;
- Une deuxième interface 160 de communication apte à établir des connexions à travers un réseau 300, par exemple le réseau Internet.

La figure 1 montre que le microprocesseur 110 de l'équipement 100 de réception audio/vidéo, les moyens 120 de stockage de l'équipement 100 de réception audio/vidéo, l'interface 130 de communication avec la télécommande de l'équipement 100 de réception audio/vidéo, l'interface 140 de communication avec l'écran de l'équipement 100 de réception audio/vidéo, la première interface 150 de réception de l'équipement 100 de réception audio/vidéo et la deuxième interface 160 de communication de l'équipement 100 de réception audio/vidéo sont interconnectés par un bus 170.

Dans cette description lorsque l'on prête une action à un dispositif, cette action est en fait réalisée par un microprocesseur dudit dispositif commandé par des codes instructions enregistrés dans une mémoire dudit dispositif. De la même manière, si l'on prête une action à un programme, ou à une application, cette action est le résultat de la mise en œuvre de codes instructions par un microprocesseur d'un dispositif dans lequel le programme ou l'application est installée.

La figure 1 montre que les moyens 120 de stockage de l'équipement de réception audio/vidéo comportent plusieurs zones :
- Une zone 120.1 système d'exploitation ;
- Une zone 120.2 de gestion des mises à jour comportant des codes instructions qui lorsque le programme correspondant est exécuté par l'équipement conduisent celui-ci à mettre en œuvre les étapes du procédé selon l'invention. La zone 120.2 peut être incluse dans la zone 120.1 système d'exploitation. La zone 120.2 peut aussi correspondre à une mémoire spécifique de type programme de démarrage ;
- Une zone 120.3 de configuration qui comporte :
   o Un identifiant d'un canal de réception de paquets de données cible, cet identifiant étant, du point de vue de l'invention, prédéterminé et renseigné en usine ou par configuration manuelle ;
   ∘ Un identifiant d'un serveur de distribution de fichier, cette adresse étant, du point de vue de l'invention, prédéterminé et renseigné en usine ou par configuration manuelle ;
- Une zone 120.4 de base de données de paquets de données pour effectuer un suivi de l'avancement d'une mise à jour ;
- Une zone 120.5 de stockage d'un fichier cible pour enregistrer un fichier cible du système d'exploitation avant que la mise à jour remplace la version courante dans la zone 120.1 système d'exploitation.

La figure 1 montre que la zone 120.4 de base de données de paquets de données est structurée pour permettre d'associer à un identifiant 120.4.1 de paquet, selon les modes de réalisation, tout ou partie des informations suivantes :
- Taille du paquet ;
- Statut de réception de paquet. Ce statut varie selon que le paquet a été correctement reçu et enregistré dans la zone de stockage de la mise à jour ou non.

Un cas où la taille du paquet est facultative est le cas où tous les paquets ont la même taille. Un cas équivalent est le cas où tous les paquets ont la même taille sauf un, le dernier.

La figure 1 montre un serveur 400 de distribution de fichiers. La figure 1 montre que le serveur 400 comporte :
- Un microprocesseur 410 ;
- Des moyens 420 de stockage ;
- Une interface 460 de communication apte à établir des connexions à travers le réseau 300.

La figure 1 montre que le microprocesseur 410 du serveur de distribution, les moyens de stockage 420 du serveur de distribution et l'interface 460 de communication du serveur de distribution sont interconnectés par un bus 470.

La figure 1 montre que les moyens 420 de stockage du serveur de distribution comporte une zone 420.1 dans laquelle sont enregistré des fichiers cible, chaque fichier cible étant identifié au moins par sa version. Dans une variante les fichiers sont également identifié par une modèle, c'est-à-dire par un identifiant de l'équipement de réception audio/vidéo pour lequel ils sont adaptés. Dans encore une autre variante le numéro de version est lié au modèle, c'est-à-dire que connaissant le numéro de version, le modèle est implicite.

Le serveur 400 est un serveur compatible au moins avec le protocole http.

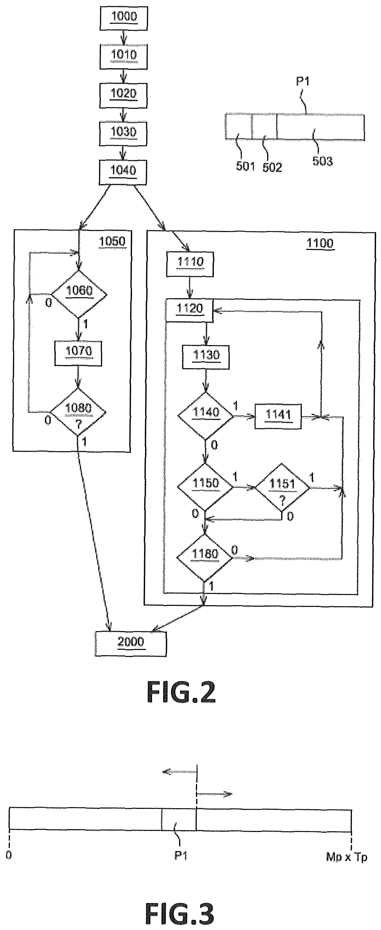

La figure 2 montre une étape 1000 initiale dans laquelle l'équipement 100 de réception audio/vidéo doit gérer une sollicitation de récupération d'un fichier cible. Dans notre exemple le fichier cible est une mise à jour du logiciel d'exploitation de l'équipement. Cette sollicitation peut être issue d'une planification interne, d'une remise à zéro de l'équipement ou de l'activation d'un menu par l'utilisateur de l'équipement. Ce ne sont là que des exemples d'origines de sollicitations possibles.

Suite à cette sollicitation l'équipement de réception audio/vidéo passe à une étape 1010 de connexion de la première interface de communication au canal dont l'identifiant est enregistré dans la zone de configuration des moyens de stockage de l'équipement de réception audio/vidéo. Sur ce canal l'équipement reçoit au moins deux types de paquets :
- Des paquets de descriptions ;
- Des paquets de données.

Chaque paquet reçu est structuré pour permettre de lire son type et son contenu. A partir du moment où la première interface est connectée, l'équipement de réception audio/vidéo reçoit et traite tous les paquets diffusés.

Dans une étape 1020 de réception d'un paquet de description, suivant l'étape 1010 de connexion, l'équipement de réception audio/vidéo reçoit un paquet de description. C'est le premier paquet de description diffusé depuis l'étape de connexion. Dans une variante, ce paquet de description est structuré pour contenir au moins :
- Le nombre de paquets permettant de reconstruire un fichier correspondant au système d'exploitation. Dans notre exemple on considère qu'il faut Mp paquets de données pour reconstituer un fichier de mise à jour du système d'exploitation;
- Pour chacun des paquets de données permettant la reconstruction, la taille des données contenues dans le paquet.

Dans la pratique le paquet de description comporte aussi des données relatives à un numéro de version du fichier décrit. Cela permet à l'équipement de réception audio/vidéo de déterminer si le paquet de description est compatible avec lui-même. L'équipement ne sélectionne pour une mise à jour que les paquets de description qui sont compatibles avec lui-même. Cette sélection s'opère, par exemple, via un identifiant de modèle contenu dans le paquet de description. Cet identifiant de modèle du paquet de description doit correspondre à un identifiant de modèle enregistré dans la zone de configuration. Dans une variante, cet identifiant de modèle est une partie d'un identifiant de version. Pour la suite de la description cet identifiant de version est implicitement utilisé pour sélectionnée les paquets de données retenus parmi les paquets de données reçus via la première interface.

Dans la pratique il existe plusieurs variantes pour décrire un fichier cible dans un fichier de description. On considère, pour l'exemple, que le paquet de description comporte :
- La taille du fichier cible, et
- La taille de chaque paquet. Il peut s'agir d'une et une seule taille, chaque paquet de données ayant la même taille, ou d'une liste de tailles, chaque taille de la liste étant associée à un identifiant de paquet de données.

Dans une variante, l'entête d'un paquet de données comporte un identifiant de taille, cette identifiant faisant référence à une taille dans une liste de tailles. Cette liste de taille est soit connue a priori, soit transmise via le paquet de description.

Dans encore une autre variante la taille d'un paquet de données est connue a priori et chaque paquet de données à la même taille. Il suffit alors que le paquet de description contienne la taille du fichier cible pour que l'on puisse en déduire le nombre de paquets de données par simple division de la taille du fichier cible par la taille connue d'un paquet de données.

Le point commun de toutes ces variantes est qu'entre les données transmises par le paquet de description et les données connues a priori il est possible, par une arithmétique simple de calculer la position d'un paquet de données dans le fichier cible.

Il existe également une variante dans laquelle le fichier de description ne contient que la taille du fichier cible et aucune autre donnée n'est connue à priori. Dans cette variante c'est l'entête d'un paquet de données qui comporte la position du paquet de données dans le fichier cible. Dans cette variante l'entête du paquet de données comporte également la taille du paquet de données.

On rappelle que la taille d'un paquet de données est, dans ce document, la taille des données que contient ce paquet de données.

Une fois la description du fichier cible connue, le principe est donc que l'équipement sélectionne, parmi les paquets de description reçu, le premier paquet de description qui lui correspond. Cette correspondance porte sur le modèle de l'équipement et sur la version de la mise à jour. L'équipement pourra éventuellement filtrer la version de la mise à jour et choisir de ne récupérer qu'une version ultérieure à la version de système d'exploitation déjà installée. Une variante pourrait être d'accepter toutes les versions dans le cas d'une restauration d'urgence de l'équipement suite, par exemple, à une corruption du système d'exploitation de l'équipement ou à une demande de mise à jour forcée. A la fin de l'étape 1020 de réception d'un paquet de description, l'équipement est donc capable de sélectionner des paquets de données parmi ceux reçus via la première interface. Ce comportement étant comparable à celui de l'état de la technique, pour la suite de la description on considère cette sélection comme implicite et on ne s'intéresse qu'à l'identifiant de paquet c'est-à-dire à son rang dans l'ensemble de paquets formant la mise à jour.

L'équipement de réception audio/vidéo passe alors à une étape 1030 d'allocation d'une zone de stockage. Cette zone de stockage est gérée par une base de données. Il s'agit de la base de données précédemment décrite en relation avec la zone de base de données des moyens de stockage de l'équipement de réception audio/vidéo.

Dans l'étape d'allocation 1030 l'équipement de réception audio/vidéo utilise les données obtenues pour calculer la taille de la zone 120.5 de stockage d'un fichier de mise à jour. Cette taille est obtenue en sommant la taille de chacun des paquets décrits par le paquet de description précédemment reçu. Si tous les paquets ont la même taille, la taille de la zone de stockage est le résultat du produit du nombre de paquets par la taille d'un paquet. On considère ce cas pour la suite de la description, chaque paquet de données a une taille Tp, c'est-à-dire qu'il contient Tp octets de données. Dans ce cas la taille de la zone de stockage du fichier de mise à jour est égale à Mp x Tp en octets.

A l'étape 1030 d'allocation l'équipement de réception audio/vidéo initialise aussi la base de données de paquets en associant à chaque identifiant de paquet le statut « non reçu » ou « KO ». Dans notre exemple les paquets de données sont identifiés par leur rang de 1 à Mp. Dans d'autre exemple le rang, donc l'identifiant, du paquet peut être sa position, exprimée en octets, dans le fichier de mise à jour. Autrement dit, il s'agirait d'un décalage en octets depuis le début du fichier de mise à jusqu'à la position du début du paquet.

L'équipement de réception audio/vidéo passe alors à une étape 1040 de réception via la première interface d'un premier paquet P1 de données. Le premier paquet de données, comme tous les paquets de données, est structuré pour comporter au moins les données suivantes :
- Un type 501 de paquet. Les types possibles sont au moins « description » et « données » ;
- Un identifiant 502 de paquet. Dans notre cas un entier compris entre 1 et Mp ;
- Une zone 503 de charge utile comportant Tp octets de données.

Dans cette étape de réception de premier paquet de données l'équipement audio/vidéo effectue les actions suivantes :
- Il enregistre les données du paquet à la position voulue dans la zone de stockage du fichier de mise à jour. La position voulue, avec les paramètres de l'exemple, est égale à : (rang du paquet - 1) x taille du paquet
- Il met à jour la base de données de paquet pour l'identifiant de paquet. Pour effectuer cette mise à jour il modifie le statut du paquet en fonction du résultat de l'opération d'enregistrement : Le statut est « OK » si l'enregistrement s'est bien déroulé, sinon le statut est « KO » ;
- Il mémorise le rang du premier paquet de données enregistré.

Puis l'équipement de réception audio/vidéo lance deux processus qui s'exécutent parallèlement :
- Un premier processus 1050 pour l'enregistrement des paquets de données reçus via la première interface ;
- Un deuxième processus 1100 pour la récupération de données du fichier de mise à jour à partir du serveur 400 de distribution.

Le point d'entrée de premier processus 1050 est une étape 1060 d'attente de réception d'un paquet de données via la première interface. Si un paquet de données est reçu via la première interface alors on passe à une étape 1060 d'enregistrement du paquet de données. Sinon on continue à attendre.

Dans l'étape 1070 d'enregistrement du paquet de données l'équipement de réception audio/vidéo effectue les actions suivantes :
- Il vérifie le statut du paquet dans la base de données, et si ce statut vaut « KO » alors :
   ∘ Il enregistre les données du paquet à la position voulue dans la zone de stockage du fichier de mise à jour.
   ∘ Il met à jour la base de données de paquets pour l'identifiant de paquet.

L'équipement de réception audio/vidéo passe alors à une étape 1080 dans laquelle il vérifie si le fichier de mise à jour a été complètement reçu. Cette vérification se fait en s'assurant que, dans la base de données de paquets, tous les paquets ont un statut valant « OK ». Si c'est le cas alors on passe à une étape 2000 de finalisation de la réception du fichier de mise à jour, sinon on passe à l'étape 1060 d'attente de réception d'un paquet.

Dans l'invention, sur le canal de mise à jour, les paquets de données sont diffusés en ordre de rang décroissant. C'est-à-dire que le paquet de données qui sera diffusé après le paquet de rang N sera le paquet de données de rang N-1. Le fichier de mise à jour est, en quelque sorte, diffusé à l'envers.

Le point d'entrée du deuxième processus 1100 est une étape 1110 d'émission d'une première requête, via la deuxième interface, vers le serveur de distribution. Cette requête est une requête selon le protocole http, ou https. Les paramètres de cette requête sont :
- Un identifiant du fichier à télécharger, cet identifiant étant obtenu via le paquet de description et/ou le modèle de l'équipement de réception audio/vidéo ;
- Une position de démarrage de téléchargement, cette position étant égale à la somme des tailles des paquets de rang inférieur ou égal au rang du premier paquet reçu. Dans notre exemple cette position est égale à la taille d'un paquet multipliée par le rang du premier paquet reçu. Cela correspond à la position dans le fichier cible du premier paquet reçu, position à laquelle on ajoute la taille du premier paquet reçu. Cette position est donc calculée en fonction de la position dans le fichier cible du premier paquet reçu. Le mode de calcul dépend du mode de description utilisé par le paquet de description.

L'équipement de réception audio/vidéo passe alors à une étape 1120 dans laquelle il reçoit, en réponse à la première requête, des données via la deuxième interface. Ces données sont des données du fichier de mise à jour correspondant aux paquets de rangs supérieurs au rang du premier paquet de données reçu. L'équipement de réception audio/vidéo.

Dans l'étape 1120 de réception de données via la deuxième interface, l'équipement de réception audio/vidéo enregistre les données reçues via la deuxième interface dans à zone de stockage du fichier de mise à jour à partir d'une position égale à la position de démarrage de téléchargement de la requête dont la réponse est reçue. L'identifiant du paquet dont il faut mettre le statut à jour se déduit de :
- La position de démarrage de la requête ;
- La quantité de données totale reçue en réponse à la requête.

La figure 3 illustre le fait que :
- Le premier processus enregistre les données depuis le premier paquet reçu vers le début du fichier de mise à jour ;
- Le deuxième processus enregistre les données depuis la fin de premier paquet reçu vers la fin du fichier de mise à jour.

Dans l'étape 1120 de réception de données en réponse à la première requête, l'équipement de réception audio/vidéo met à jour la base de données de paquets au fur et à mesure qu'il reçoit des données. A chaque fois que Tp octets sont reçus, l'équipement de réception audio/vidéo met à jour le statut du paquet correspondant dans la base de données de paquets. C'est une sous étape 1130 de l'étape 1130 de mise à jour de la base de données de paquets.

La sous étape 1130 de mise à jour de la base de données de paquets est suivie d'une sous-étape 1140 de vérification d'atteinte de la fin du fichier.

Si la fin du fichier est atteinte alors on passe à une étape 1141 d'émission d'une deuxième requête via la deuxième interface de communication pour obtenir le fichier de mise à jour à partir d'une position de requête égale à 0. Il est entendu que les traitements correspondant à la requête précédemment active sont interrompus. Le traitement se poursuit alors à l'étape 1120 de réceptions de données via la deuxième interface.

Si la fin du fichier n'est pas atteinte alors on passe à une étape 1150 de vérification d'un croisement entre le premier processus et le deuxième processus. Cette étape est optionnelle. Si cette étape n'est pas mise en œuvre alors on passe à une étape 1180 de vérification du fait que le fichier de mise à jour est complet ou non.

Un croisement s'est produit si la position d'écriture courante, dans la zone de stockage, des données reçues via la deuxième interface a été inférieure à la position d'écriture courante, dans la zone de stockage, des données reçues via la première interface, et si la position d'écriture courante, dans la zone de stockage, des données reçues via la deuxième interface devient supérieure à la position d'écriture courante, dans la zone de stockage, des données reçues via la première interface. On rappelle en effet que le premier processus enregistre des paquets vers le début du fichier de mise à jour, alors que le deuxième processus enregistre des paquets vers la fin du fichier de mise à jour.

Si un croissement a eu lieu on passe à une étape 1151 de recherche d'un paquet manquant dans la base de données de paquet. Pour cette recherche l'équipement de réception audio/vidéo parcourt la base de données de paquets dans l'ordre des rangs croissant pour trouver un paquet dont le statut est « KO ». Un tel paquet, trouvé après un croisement, est un paquet manquant, c'est-à-dire un paquet qui a été mal, ou pas, reçu via la première interface. Le parcours commence à partir du dernier paquet reçu via la deuxième interface.

Si un paquet manque alors on passe à une étape 1152 d'émission d'une troisième requête via la deuxième interface de communication pour obtenir le fichier de mise à jour à partir d'une position de requête égale à la position du paquet manquant dans la zone de stockage de fichier de mise à jour. Il est entendu que les traitements correspondant à la requête précédemment active sont interrompus. Le traitement se poursuit alors à l'étape 1120 de réceptions de données via la deuxième interface.

Si aucun paquet ne manque on passe à l'étape 1180 dans laquelle l'équipement de réception audio/vidéo vérifie si le fichier de mise à jour a été complètement reçu. Cette étape est identique à l'étape 1080 du même nom pour le premier processus. Si le fichier de mise à jour est complet, alors on passe à l'étape 2000 de finalisation de la réception du fichier de mise à jour, sinon on passe à l'étape 1120 de réception de données via la deuxième interface.

Dans l'étape 2000 de de finalisation de la réception du fichier de mise à jour l'équipement de réception audio/vidéo utilise le contenu de la zone 120.5 de stockage du fichier de mise à jour pour mettre à jour la zone 120.1 système d'exploitation.

Avec l'invention il est donc possible de sensiblement accélérer la récupération d'un fichier de mise à jour d'un système d'exploitation d'un équipement de réception audio/vidéo. Les impacts externes à l'équipement sont mineurs :
- Aucun impact au niveau de serveur 400 de distribution, on utilise les capacités standard du protocole http ;
- Au niveau de la diffusion des paquets via l'interface de diffusion unidirectionnelle on inverse l'ordre de diffusion des paquets de données.

L'invention est particulièrement efficace quand les deux processus de récupération de données écrivent dans des directions opposées. Autrement dit, les données sont reçues en ordre différent sur les deux interfaces. Dans l'exemple de mise en œuvre décrit le premier processus écrit vers le début du fichier des données reçues en ordre décroissant, alors que le deuxième processus écrit vers la fin du fichier des données reçues en ordre croissant. C'est le cas le plus élégant car il n'implique que peu de modifications aussi bien au niveau de l'équipement qu'au niveau de l'infrastructure.

Le principe de l'invention s'applique encore si on reçoit, sur la première interface des paquets de données en ordre croissant. Dans ce cas il faut que sur la deuxième interface on reçoive les données en ordre inverse, c'est-à-dire décroissant, et qu'on les écrive vers le début du fichier. Un tel résultat peut être obtenu, par exemple, en enregistrant les fichiers à l'envers sur le serveur de distribution ou en les lisant de la fin au début.

L'invention fonctionne également parfaitement pour la récupération de n'importe quel type de fichier, par exemple des fichiers vidéo.

## Revendications

1. Procédé de récupération d'un fichier cible par un équipement (100) de réception audio/vidéo ledit équipement de réception audio/vidéo comportant au moins deux interfaces de communications, une première interface (150) de communication apte à recevoir des données diffusées et une deuxième interface (160) de communication apte à l'établissement d'un dialogue bidirectionnel avec un serveur (400), le procédé comportant les étapes suivantes :
- Connection (1010) de la première interface de communication sur un canal prédéterminé diffusant des données cible, les données étant structurée en paquets, chaque paquet étant d'un type parmi des types prédéfinis ;
- Réception (1020), via la première interface de communication d'un paquet de description comportant des informations sur la structure des paquets de données composant le fichier cible;
- Allocation (1030) d'une zone de stockage d'une taille déterminée selon la description, chaque paquet étant associé à une taille, la taille de la zone de stockage est égale à la somme des tailles des paquets ;
- Réception (1040) via la première interface d'un premier paquet de données chaque paquet de données comportant :
∘ Un identifiant rang de paquet représentant le rang du paquet parmi tous les - paquets du fichier cible ;
∘ Des données en quantité telle que décrite par le paquet de description reçu ;
- Emission (1110) d'une première requête via la deuxième interface de communication pour obtenir le fichier cible à partir d'une position de requête déterminée à partir de la position dans le fichier cible du premier paquet reçu ;
- Enregistrement (1050) des données reçues par la première interface dans la zone de stockage allouée;
- Enregistrement (1120) des données reçues par la deuxième interface dans la zone de stockage allouée;
- Arrêt (2000) des enregistrements quand la zone de stockage allouée est pleine ; le procédé étant **caractérisé en ce que** les paquets de données reçus via la première interface sont reçus par rang décroissant, tandis que les paquets reçus via la deuxième interface sont reçus par ordre croissant, **en ce que**, lors de l'enregistrement (1050) des données reçues par la première interface dans la zone de stockage allouée, les données sont enregistrées depuis le premier paquet reçu vers le début du fichier cible, chaque paquet de données étant enregistré à partir d'une position égale à la somme des tailles des paquets de rang inférieur au sien dans la zone de stockage et **en ce que**, lors de l'enregistrement (1120) des données reçues par la deuxième interface dans la zone de stockage allouée, les octets reçus sont continument enregistrés à partir de la position utilisée par la première requête dans la zone de stockage, les données étant enregistrées depuis la fin de premier paquet reçu vers la fin du fichier cible.

2. Procédé de récupération d'un fichier cible selon la revendication 1, **caractérisé en ce que** les informations sur la structure des paquets comportent au moins un nombre de paquets de données pour reconstituer le fichier cible et au moins une taille Tp d'un paquet de données associée à au moins un rang de paquet.

3. Procédé de récupération d'un fichier cible selon la revendication 1, **caractérisé en ce que** les informations sur la structure des paquets comportent le nombre de paquets de données pour reconstituer le fichier cible, la taille d'un paquet étant connue a priori et tous les paquets ayant la même taille.

4. Procédé de récupération d'un fichier cible selon la revendication 1, **caractérisé en ce que** les informations sur la structure des paquets comportent la taille d'un paquet et la taille du fichier cible.

5. Procédé de récupération d'un fichier cible par un équipement de réception audio/vidéo selon l'une des revendications précédentes **caractérisé en ce que** si la valeur obtenue en additionnant la position utilisée par la première requête avec la quantité de données obtenue en réponse à la première requête devient supérieure ou égale à la taille de la zone de stockage allouée alors le procédé comporte les étapes suivantes :
- Fin de l'enregistrement des données reçues par la deuxième interface en réponse à la première requête ;
- Emission (1141) d'une deuxième requête via la deuxième interface de communication pour obtenir le fichier cible à partir d'une position de requête égale à 0 ;
- Enregistrement (1120) des données reçues par la deuxième interface, en réponse à la deuxième requête, dans la zone de stockage allouée, les octets reçus étant continument enregistrés à partir du début de la zone de stockage.

6. Procédé de récupération d'un fichier cible par un équipement de réception audio/vidéo selon l'une des revendications précédentes **caractérisé en ce que** si la position d'écriture courante, dans la zone de stockage, des données reçues via la deuxième interface a été inférieure à la position d'écriture courante, dans la zone de stockage, des données reçues via la première interface, et si la position d'écriture courante, dans la zone de stockage, des données reçues via la deuxième interface devient supérieure à la position d'écriture courante, dans la zone de stockage, des données reçues via la première interface, alors le procédé met en œuvre les étapes suivantes :
- Fin de l'enregistrement des données reçues par la deuxième interface ;
- Emission (1152) d'une troisième requête via la deuxième interface de communication pour obtenir le fichier cible à partir d'une position de requête égale à la position d'un premier paquet manquant ;
- Enregistrement (1120) des données reçues par la deuxième interface, en réponse à la troisième requête, dans la zone de stockage allouée, les octets reçus étant continument enregistrés à partir de la position utilisée par la troisième requête dans la zone de stockage jusqu'à concurrence de la taille du paquet ;
- Répétition (1151) des étapes précédentes tant qu'il y a des paquets manquants.

7. Procédé de récupération d'un fichier cible par un équipement de réception audio/vidéo selon l'une des revendications précédentes **caractérisé en ce que** les données d'un paquet de données reçu via la première interface sont enregistrées (1070) dans la zone de stockage que si l'identifiant du paquet de données est associé, au niveau de l'équipement de réception, à une information d'absence des données.

8. Dispositif mémoire non transitoire comportant des codes instructions pour la mise en œuvre du procédé selon l'une des revendications précédentes.

9. Equipement de réception audio/vidéo mettant en œuvre un procédé selon l'une des revendications 1 à 7.

10. Produit programme d'ordinateur comprenant des instructions qui, lorsque le programme est exécuté par un ordinateur, conduisent celui-ci à mettre en œuvre les étapes du procédé selon l'une des revendications 1 à 7.

## Patentansprüche

1. Verfahren zur Wiederherstellung einer Zieldatei durch eine Audio-/Video-Empfangsausrüstung (100), wobei die Audio-/Video-Empfangsausrüstung mindestens zwei Kommunikationsschnittstellen aufweist, eine erste Kommunikationsschnittstelle (150), die zum Empfang der verbreiteten Daten geeignet ist, und eine zweite Kommunikationsschnittstelle (160), die zum Aufbau eines bidirektionalen Dialogs mit einem Server (400) geeignet ist, wobei das Verfahren die folgenden Schritte aufweist:
- Verbinden (1010) der ersten Kommunikationsschnittstelle mit einem vorbestimmten Kanal, der Zieldaten verbreitet, wobei die Daten in Paketen strukturiert sind, wobei jedes Paket von einem der vordefinierten Typen ist;
- Empfangen (1020) eines Beschreibungspakets über die erste Kommunikationsschnittstelle, das Informationen über die Struktur der Datenpakete enthält, die die Zieldatei bilden;
- Zuweisen (1030) eines Speicherbereichs mit einer Größe, die gemäß der Beschreibung festgelegt wird, wobei jedem Paket eine Größe zugeordnet wird, wobei die Größe des Speicherbereichs gleich der Summe der Größen der Pakete ist;
- Empfangen (1040) eines ersten Datenpakets über die erste Schnittstelle, wobei jedes Datenpaket aufweist:
∘ eine Paketrang-Kennung, die den Rang des Pakets unter allen - Paketen der Zieldatei darstellt;
∘ Daten in der Menge, wie sie durch das empfangene Beschreibungspaket beschrieben wird;
- Senden (1110) einer ersten Abfrage über die zweite Kommunikationsschnittstelle, um die Zieldatei ab einer Abfrageposition zu erhalten, die ab der Position in der Zieldatei des ersten empfangenen Pakets bestimmt wird;
- Speichern (1050) der über die erste Schnittstelle empfangenen Daten im zugewiesenen Speicherbereich;
- Speichern (1120) der über die zweite Schnittstelle empfangenen Daten im zugewiesenen Speicherbereich,
- Beenden (2000) der Speicherung, wenn der zugewiesene Speicherbereich voll ist;
wobei das Verfahren **dadurch gekennzeichnet ist, dass** die über die erste Schnittstelle empfangenen Datenpakete rangabsteigend empfangen werden, wohingegen die über die zweite Schnittstelle empfangenen Pakete in aufsteigender Reihenfolge empfangen werden, dass beim Speichern (1050) der über die erste Schnittstelle empfangenen Daten im zugewiesenen Speicherbereich die Daten vom ersten empfangenen Paket am Anfang der Zieldatei gespeichert werden, wobei jedes Datenpaket ab einer Position gespeichert wird, die gleich der Summe der Größen Pakete mit gegenüber dem eigenen Rang niedrigeren Rang im Speicherbereich ist, und dass beim Speichern (1120) der über die zweite Schnittstelle empfangenen Daten im zugewiesenen Speicherbereich die empfangenen Bytes fortlaufend ab der von der ersten Abfrage verwendeten Position im Speicherbereich gespeichert werden, wobei die Daten vom Ende des ersten empfangenen Pakets zum Ende der Zieldatei gespeichert werden.

2. Verfahren zur Wiederherstellung einer Zieldatei nach Anspruch 1, **dadurch gekennzeichnet, dass** die Informationen über die Struktur der Pakete mindestens eine Anzahl von Datenpaketen zum Wiederherstellen der Zieldatei und mindestens eine Größe Tp eines Datenpakets, die mindestens einem Paketrang zugeordnet ist, aufweisen.

3. Verfahren zur Wiederherstellung einer Zieldatei nach Anspruch 1, **dadurch gekennzeichnet, dass** die Informationen über die Struktur der Pakete die Anzahl der Datenpakete zur Wiederherstellung der Zieldatei umfassen, wobei die Größe eines Pakets a priori bekannt ist und alle Pakete die gleiche Größe haben.

4. Verfahren zur Wiederherstellung einer Zieldatei nach Anspruch 1, **dadurch gekennzeichnet, dass** die Informationen über die Struktur der Pakete die Größe eines Pakets und die Größe der Zieldatei aufweisen.

5. Verfahren zur Wiederherstellung einer Zieldatei durch ein Audio-/Video-Empfangsausrüstung nach einem der vorhergehenden Ansprüche, **dadurch gekennzeichnet, dass**, wenn der Wert, der durch Addition der von der ersten Abfrage verwendeten Position mit der als Antwort auf die erste Abfrage erhaltenen Datenmenge erhalten wird, größer oder gleich der Größe des zugewiesenen Speicherbereichs wird, das Verfahren die folgenden Schritte aufweist:
- Beenden des Speicherns der von der zweiten Schnittstelle empfangenen Daten als Antwort auf die erste Abfrage;
- Senden (1141) einer zweiten Abfrage über die zweite Kommunikationsschnittstelle, um die Zieldatei ab einer Abfrageposition gleich 0 zu erhalten;
- Speichern (1120) der über die zweite Schnittstelle empfangenen Daten als Antwort auf die zweite Abfrage im zugewiesenen Speicherbereich, wobei die empfangenen Bytes ab dem Anfang des Speicherbereichs fortlaufend gespeichert werden.

6. Verfahren zur Wiederherstellung einer Zieldatei durch eine Audio-/Video-Empfangsausrüstung nach einem der vorhergehenden Ansprüche, **dadurch gekennzeichnet, dass**, wenn die aktuelle Schreibposition der über die zweite Schnittstelle empfangenen Daten im Speicherbereich niedriger war als die aktuelle Schreibposition der über die erste Schnittstelle empfangenen Daten im Speicherbereich und wenn die aktuelle Schreibposition der über die zweite Schnittstelle empfangenen Daten im Speicherbereich höher wird als die aktuelle Schreibposition der über die erste Schnittstelle empfangenen Daten im Speicherbereich, das Verfahren die folgenden Schritte durchführt:
- Beenden des Speicherns der über die zweite Schnittstelle empfangenen Daten;
- Senden (1152) einer dritten Abfrage über die zweite Kommunikationsschnittstelle, um die Zieldatei ab einer Abfrageposition zu erhalten, die der Position eines ersten fehlenden Pakets entspricht;
- Speichern (1120) der über die zweite Schnittstelle empfangenen Daten als Antwort auf die dritte Abfrage im zugewiesenen Speicherbereich, wobei die empfangenen Bytes ab der von der dritten Abfrage verwendeten Position im Speicherbereich bis zum Erreichen der Paketgröße fortlaufend gespeichert werden;
- Wiederholen (1151) der vorherigen Schritte, solange es fehlende Pakete gibt.

7. Verfahren zur Wiederherstellung einer Zieldatei durch ein Audio-/Video-Empfangsausrüstung nach einem der vorhergehenden Ansprüche, **dadurch gekennzeichnet, dass** die Daten eines über die erste Schnittstelle empfangenen Datenpakets nur dann im Speicherbereich gespeichert werden (1070), wenn die Kennung des Datenpakets bei der Empfangsausrüstung einer Information über das Fehlen der Daten zugeordnet ist.

8. Nicht-transitorische Speichervorrichtung, die Codeanweisungen zur Durchführung des Verfahrens nach einem der vorhergehenden Ansprüche aufweist.

9. Audio-/Video-Empfangsausrüstung zur Durchführung eines Verfahrens nach einem der Ansprüche 1 bis 7.

10. Rechnerprogrammprodukt, das Anweisungen umfasst, die, wenn das Programm von einem Computer ausgeführt wird, diesen dazu veranlassen, die Schritte des Verfahrens nach einem der Ansprüche 1 bis 7 durchzuführen.

## Claims

1. A method for recovering a target file by an audio/video receiving equipment (100), said audio/video receiving equipment including at least two communication interfaces, a first communication interface (150) able to receive broadcast data and a second communication interface (160) able to establish a bidirectional dialog with a server (400), **characterised in that** the method includes the following steps of:
- connecting (1010) the first communication interface on a predetermined channel broadcasting target data, the data being structured as packets, each packet being of a type among predefined types;
- receiving (1020), via the first communication interface a description packet including information about the structure of the data packets making up the target file;
- allocating (1030) a storage zone of a determined size according to the description, each packet being associated with a size, the size of the storage zone being equal to the sum of the packet sizes;
- receiving (1040) via the first interface a first data packet, each data packet including:
∘ a packet rank identifier representing the rank of the packet among all the packets of the target file;
∘ data in an amount such as described by the description packet received;
- transmitting (1110) a first request via the second communication interface to obtain the target file from a determined request position from the position in the target file of the first packet received;
- recording (1050) the data received by the first interface in the allocated storage zone,
- recording (1120) data received by the second interface in the allocated storage zone;
- stopping (2000) recordings when the allocated storage zone is full,
the method being **characterized in that** the data packets received via the first interface are received in decreasing rank, while the packets received via the second interface are received in ascending rank, **in that**, when recording (1050) the data received by the first interface in the allocated storage zone, the data is recorded from the first packet received towards the beginning of the target file, each data packet being recorded from a position equal to the sum of the sizes of the packets of lower rank than its own in the storage zone and **in that**, when recording (1120) the data received by the second interface in the allocated storage zone, the received bytes are continuously recorded from the position used by the first request in the storage zone, the data being recorded from the end of the first packet received towards the end of the target file.

2. The method for recovering a target file according to claim 1, **characterised in that** the information about the packet structure includes at least one number of data packets to reconstitute the target file and at least one size Tp of a data packet associated with at least one packet rank.

3. The method for recovering a target file according to claim 1, **characterised in that** the information about the packet structure includes the number of data packets to reconstitute the target file, the size of a packet being known a priori and all the packets having the same size.

4. The method for recovering a target file according to claim 1, **characterised in that** the information about the packet structure includes the size of a packet and the size of the target file.

5. The method for recovering a target file by an audio/video receiving equipment according to one of the preceding claims, **characterised in that** if the value obtained by adding the position used by the first request with the amount of data obtained in response to the first request becomes higher than or equal to the size of the allocated storage zone, then the method includes the following steps of:
- ending recording the received data by the second interface in response to the first request;
- transmitting (1141) a second request via the second communication interface to obtain the target file from a request position equal to 0;
- recording (1120) the data received by the second interface, in response to the second request, in the allocated storage zone, the bytes received being continuously recorded from the beginning of the storage zone.

6. The method for recovering a target file by an audio/video receiving equipment according to one of the preceding claims, **characterised in that** if the current writing position, in the storage zone, of data received via the second interface has been lower than the current writing position, in the storage zone, of data received via the first interface, and if the current writing position, in the storage zone, of data received via the second interface becomes higher than the current writing position in the storage zone of data received via the first interface, then the method implements the following steps of:
- ending recording the data received by the second interface;
- transmitting (1152) a third request via the second communication interface to obtain the target file from a request position equal to the position of a first missing packet;
- recording (1120) the data received by the second interface, in response to the third request, in the allocated storage zone, the bytes received being continuously recorded from the position used by the third request in the storage zone up to the size of the packet;
- repeating (1151) the previous steps as long as there are missing packets.

7. The method for recovering a target file by an audio/video receiving equipment according to one of the preceding claims, **characterised in that** the data of a data packet received via the first interface are recorded (1070) in the storage zone only if the data packet identifier is associated, at the receiving equipment, with data absence information.

8. A non-transitory memory device including instruction codes for implementing the method according to one of the preceding claims.

9. An audio/video receiving equipment implementing a method according to one of claims 1 to 7.

10. A computer program product including instructions which, when the program is executed by a computer, cause the same to implement the steps of the method according to one of claims 1 to 7.
